# EUROPEAN PATENT APPLICATION

(11) **EP 1 750 225 A1**
(43) Date of publication of application: **07.02.2007**
(21) Application number: 06253630.5
(22) Date of filing: 11.07.2006
(51) Int. Cl.: G06Q 10/00

(54) **Supply scheduling**

(30) Priority: 12.07.2005 GB 0514276
(71) Applicant: Firth Rixson Limited, Sheffield S9 1JD (GB)
(72) Inventor: Forster, Andrew c/o Firth Rixson Limited, Sheffield, S9 1JD (GB); Parnham, Richard c/o Firth Rixson Forgings Ltd., Derbyshire, DE4 2JB (GB)
(74) Representative: Alton, Andrew

(57) **Abstract**

Computer implemented methods, data processing apparatus and manufacturing systems for determining or using current supplier schedule are described. A current customer requirement file is received including data items specifying a customer's current requirement of different parts each having associated supply dates from the supplier. The total quantity of each different type of part for each of a plurality of different time periods is determined. Data items specifying the total quantity of each different part and respective associated supply dates are stored in a current supplier schedule file. The current supplier schedule file is exported and can be displayed. A current net change in the supplier schedule based on the current supplier schedule and a previous supplier schedule can also be determined.

## Description

The present invention relates to supply scheduling, and in particular to determining a current schedule for a supplier based on customer requirements.

A customer of a supplier can specify an order of various quantities of a number of different parts that the customer wants the supplier to provide, for example by manufacture, and by when the parts are required. The supplier can then determine what parts, the quantity of those parts and when to manufacture, or otherwise source, them to meet the customer's requirements.

However, the customers requirements may change, for example as a result of winning a new contract, in which case the quantity and type of parts and when they are required by may change. For a customer having a large number of supplying manufacturers and requiring a large number of different parts for a large number of different projects, it can be very difficult to determine exactly what parts are needed by the customer and by when. A customer may not be able to generate order information reflecting the customers overall) requirements and/or how they have changed for each of many individual suppliers, or even for an individual suppler which can source many different parts. Therefore, what tends to happen in practice is that the customer, or different business units of the customer, or individual employees of the customer, each place their own orders with various suppliers, as it is too difficult to determine the overall requirements of the customer.

Hence, a supplier is often provided simply with a large number of separate orders for a wide number of parts to be supplied. What parts are to be supplied, in what quantity and by when, can all vary with time. Therefore, it can be very difficult for a supplier to determine the correct quantity of which parts to supply at any time in order to meet the customers current demands. Hence, manufacturing and other supply schedules can be very hard to determine to ensure that customer orders are met in a timely manner.

It would therefore be beneficial for a supplier to be able to determine exactly what a customer's current actual order requirements are so that manufacturing, or other supply schedules, can be planned or changed to help ensure that the supplier can meet those order requirements, if they change with time.

According to a first aspect of the present invention, there is provided a computer implemented method for determining a current supplier schedule specifying supply dates for quantities of different parts. A current customer requirement file can be received including data items specifying a customer's current requirement of different parts. Each part can have an associated supply date from a supplier. The total quantity of each different type of part can be determined for different time periods. Data items specifying the total quantity of each different part and associated supply dates can be stored in a current supplier schedule file. The current supplier schedule file can be exported.

The total quantity of each different type of part required at different times is determined and so the supplier schedule including this information allows the supplier to determine what parts are required and when. Hence, it is easier to determine what resources will be required to meet the customers requirements and easier for the supplier to plan and schedule the work required to meet those requirements.

The current supplier schedule file can be exported to a display process. The display process can then display the current supplier schedule on a display device. Hence, the data is easily viusualizable. The schedule can be displayed in a grid or matrix format. The schedule can include part identifiers or part numbers. The schedule can include date information indicating the date by which a part is to be supplied. Each cell can include the quantity or total number of a part required by a date.

The current supplier schedule file or data from it can be exported to a supply planning process. The supply planning process can be a manufacturing planning process.

The supplier can be a manufacturing company and in particular an engineering company. More particularly the engineering company can be a metals manufacturing company and the parts can be aerospace parts. The customer company can be an engineering company, and in particular a manufacturing company, more particularly an aerospace company.

The current supplier schedule file or data therefrom can be exported to a manufacturing control process. Hence, the data can be used to control manufacture of the parts specified in the schedule.

The method can further comprise the manufacturing control process controlling a manufacturing device to manufacture at least some of the parts or items. Hence, data from the supplier schedule can be used to control the manufacture of parts to meet at least some of the customer orders defined by the schedule.

The method can further comprise determining a current net change supplier schedule. The net change in the total quantity of each different type of part for each of a plurality of different time periods can be determined from a previous supplier schedule and the current supplier schedule. Data items specifying the net change in the total quantity of each different part and respective associated supply dates can be saved in a current net change supplier schedule file. The current net change supplier schedule file, or data therefrom, can then be exported. The file data can be exported to a display or reporting process to display the current net change supplier schedule.

The method can further comprising displaying the current net change supplier schedule including part identifiers, dates for each of the plurality of time periods and the net change in the total number of each part in the schedule.

The net change supplier schedule can be displayed in a grid or matrix form. Each row of the grid can correspond to a different part or item type. Each column of the grid can correspond to a different time period. Cells of the grid can display a net change data item, showing the change in the total number of a type of part for a time period for a current supplier schedule compared to a previous supplier schedule. Increases and decreases can be represented in visually different manners. For example, in different colours, different texts, different fonts, with different temporal properties, e.g. flashing. Increases can be displayed in a first colour and decreases can be displayed in a second different colour. Increases can be displayed in black and decreases can be displayed in red.

Determining the total quantity of each different type of part can include ordering part type data items by part type and supply date.

Determining the total quantity of each different type of part can include maintaining a total data item from quantity data items for each of the plurality of different time periods.

The method can further comprise displaying the current supplier schedule including part identifiers, dates for each of the plurality of time periods and the total number of each part in the schedule. The current supplier schedule can be displayed in a grid or matrix form. Each row of the grid can correspond to a different part or item type. Each column of the grid can correspond to a different time period. Cells of the grid can display a total quantity of a type of part for a time period.

According to a further aspect of the invention, there is provided a method for manufacturing a plurality of different parts or items. The method can comprise determining a current supplier schedule requirement for the plurality of different parts according to the method aspect of the invention. At least some of the plurality of different items specified in the current supplier schedule can be manufactured.

According to a further aspect of the invention, there is provided a data processing apparatus for determining a current supplier schedule for a plurality of different parts. The apparatus can comprise a data processing device and computer program code for configuring the data processing device. The computer program code can configure the device to receive a current customer requirement file including data items specifying a customer's current requirement of different parts having associated supply dates; determine the total quantity of each different type of part for each of a plurality of different time periods; store data items specifying the total quantity of each different part and associated supply dates; and export the current supplier schedule data items.

According to a further aspect of the invention, there is provided a manufacturing system for manufacturing a part. The manufacturing system can comprise the data processing device aspect of the invention and a manufacturing device controlled to produce a part specified in the schedule. The manufacturing device which can be operated by a manufacturing device control process. The manufacturing control process can access the current supplier schedule file or data therefrom to control the manufacturing device to manufacture the part.

According to a further aspect of the invention, there is provided a computer implemented method for determining a current net change supplier schedule specifying net changes in quantities of different parts and supply dates. A current supplier schedule specifying the total quantity of each different type of part for different time periods can be determined from a current customer requirement file. A previous supplier schedule specifying the total quantity of each different type of part for different time periods can have been determined from a previous customer requirement file. The net change in the total quantity of each different type of part for different time periods can be determined from the current supplier schedule and the previous supplier schedule. Data items specifying the net change in the quantity of each different part and associated supply dates can be stored in a current net change supplier schedule file. The current net change supplier schedule file can be exported.

According to a further aspect of the invention, there is provided computer program code executable by a data processing device to provide any of the method, apparatus or manufacturing system aspects of the invention. A computer program product comprising a computer readable medium bearing such computer program code is also provided as an aspect of the invention.

An embodiment of the invention will now be described, by way of example only, and with reference to the accompanying drawings, in which:
Figure 1 shows a schematic block diagram of an ordering platform in which the present invention can be used and including manufacturing systems according to the invention;
Figure 2 shows a high level process flow chart illustrating a method of managing a manufacturing process to take into account changes in a customers demands according to the invention;
Figure 3 shows a schematic representation of a customer order data structure;
Figure 4 shows a high level process flow chart illustrating a method for determining a current supplier schedule according to the invention;
Figure 5 shows a schematic representation of a current supplier schedule generated by the process illustrated in Figure 4;
Figures 6A & 6B show a process flow chart illustrating processes carried out during the process illustrated in Figure 4 in greater detail;
Figures 7A & 7B show a process flow chart illustrating an alternative method for determining a current supplier schedule according to the invention; and
Figure 8 shows a schematic block diagram of a data processing apparatus according to the invention for carrying out the other aspects of the invention illustrated in Figures 4 to 7.

Similar items in different Figures share common reference numerals unless indicated otherwise.

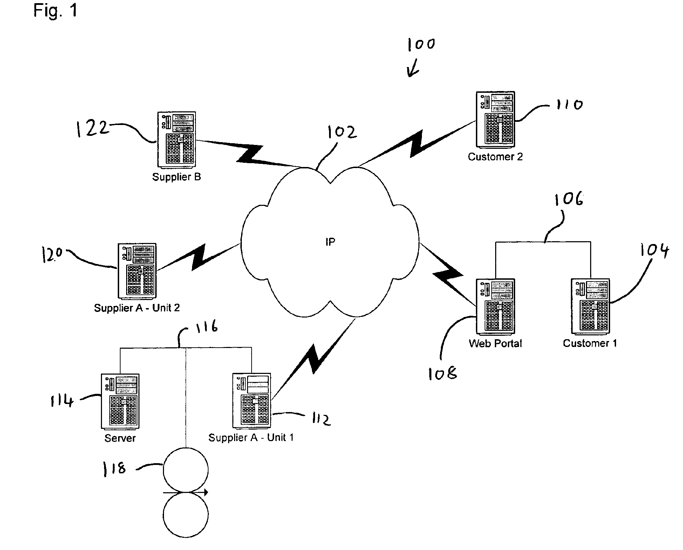

With reference to Figure 1 there is shown a schematic block diagram of a supplier-customer platform 100 in which the present invention can be used and comprising parts according to the present invention. The platform 100 includes a wide area network, such as the Internet, 102, via which data processing devices of the various parties can communicate. A first customer server 104 is associated with a first customer and has access to order data for the first customer. The customer order data can be transferred over a local network 106 to a web server 108 which provides a web portal via which suppliers can access order data for the first customer.

In some embodiments, a further customer server 110 can be provided. The further customer server 110 can be associated with the first customer. For example the second customer server 110 may be associated with a different business unit or division to the first customer server 104. The second customer server 110 can have access to order data specifying order requirements for the business unit or division of the customer. The second customer server can access the web server 108 via the Internet 102 so that order data for the second customer can be included on the web portal for access by suppliers.

In another embodiment, a business to business platform can be provided in which second customer server 110 is associated with a second customer different to the first customer, but in a similar technology field or industry. Hence the web portal 108 can act as a central web portal for the industry and can provide access to order requirement data for a number of different customers in the industry.

The following discussion will be focussed on the embodiment in which the first customer server 104 and second customer server 110 are both associated with the same company, and in particular an aerospace company.

A first supplier can have a supplier server 112 associated with a first business unit in communication with the Internet 102. The first supplier server can be in communication with a manufacturing process scheduling or manufacturing process control server 114 via a local area network 116. The manufacturing control server 114 can also be in communication with a manufacturing device or apparatus 118, such as a device for manufacturing a particular part or parts which the first supplier can provide to customers. For example the manufacturing device can be steel rolling mill or other device for manufacturing metal parts or components used in the aerospace industry. A further supplier server 120, associated with the first supplier, but with a different business unit, can also be provided in communication with the Internet 102. A third supplier server 122, but associated with a second supplier company, different to the first supplier company can also be provided in communication with the Internet 102.

Hence, in one embodiment, the platform 100 provides a business to business platform in which a customer, or customers can provide order data which can be accessed by the customer or customers' suppliers so that the suppliers can determine the current status of orders placed by their customers so as to plan and schedule their own supply activities, including manufacturing.

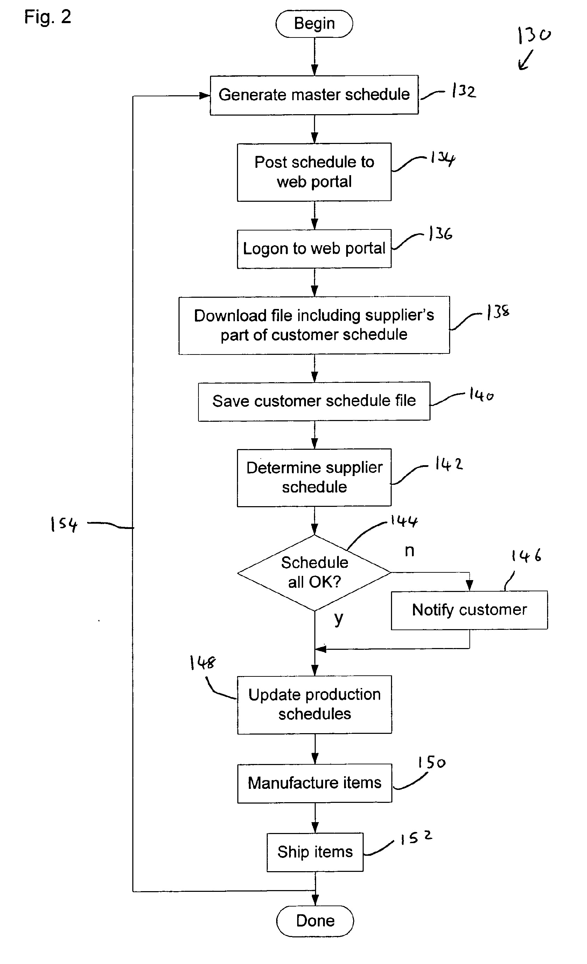

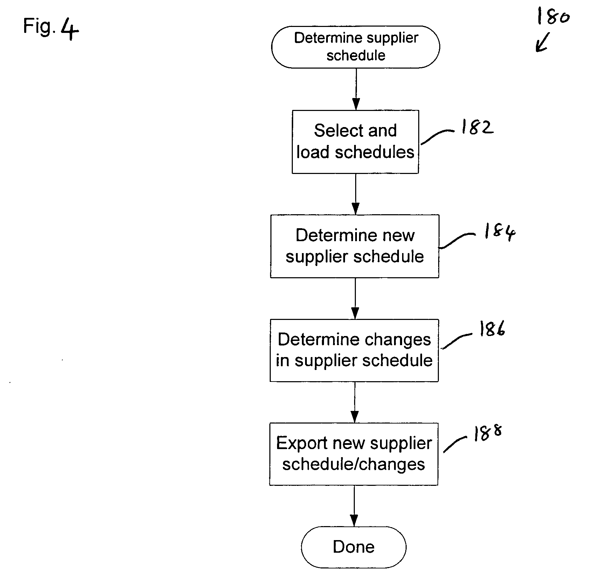

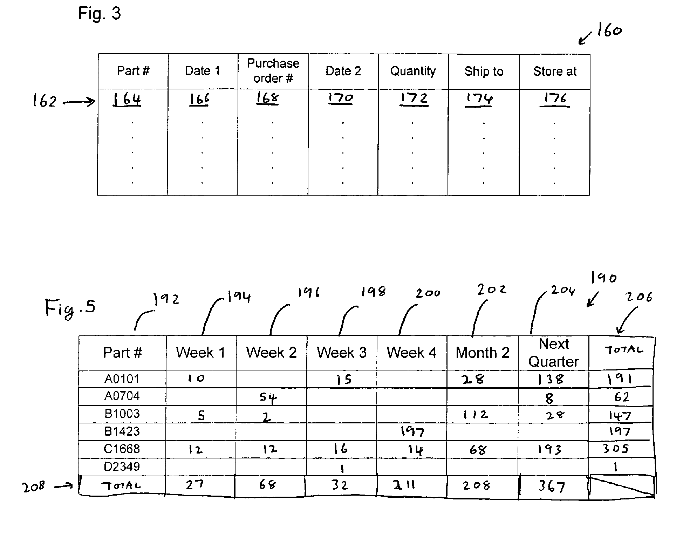

Figure 2 shows a high level process flowchart of a method 130 by which a supplier can interact with the platform 100 in order to access current customer order data in order to determine a current supplier schedule. On a periodic basis, e.g. once a week, the customer creates a master schedule of all the parts that all the different business units currently require. Figure 3 shows a schematic representation of a current customer master schedule 160. Each row, e.g. row 162. Each row, or order record, can include a number of data items. A part number data item 164 represents a part number to which the order relates. A first date data item 166 can represent the date by which the order, that is the quantity of parts specified by the order, is to be fulfilled. A purchase order number data item 168 provides a unique identifier for the order. A second date data item 170 can also be provided and can represent an agreed date, different to the first date data item 166 by which it has been agreed that the order is to be fulfilled in practice. That is the first date data item 166 may specify a mid-week date whereas a shipment is only supplied at the end of the week in which case the second date data item 170 determines the time limit by which the order is to be fulfilled. A quantity data item 172 identifies the number or quantity of the particular part number to be supplied under the order. A ship to data item 174 can also be provided which represents the location at which the ordered parts are to be shipped to. A store at data item 176 can also be provided to identify the storage location at the shipping location identified by the ship to data item 174.

Each different business unit and different purchasers within each different business unit of the customer can enter an order record 162.

Any one purchaser or business unit is not necessarily aware of the requirements of any other purchaser or business unit in the customer organisation. Therefore a first purchaser may place an order for a first quantity of a first part to be delivered by a first date. A second purchaser from a different business unit may place a separate order for a second quantity of the same part to be delivered by a different date. However each of these has a different order record and therefore separate order records are added to the overall requirements of the customer. Hence, as each purchasing unit within the customer organisation adds orders to the order schedule, gradually a master schedule of all the requirements of all the purchasers within the customer organisation is assembled, during an ordering period, such as a week. At the end of the ordering period, the current master schedule is posted to the web portal at step 134 to be made available to the suppliers. The posted master schedule specifies all outstanding orders and is updated on an approximately weekly basis.

Hence, once a week at step 136 the supplier logs on to the web portal and at step 138 a file of order data specifying all the customers' current outstanding requirements from the supplier is downloaded. The file can be in the format of a, separated variable file, in which each of data items 164 to 176, and other data items, if required, is downloaded for each order record 162 in the master schedule which the supplier is to fulfill. At step 140 the customer schedule file for the supplier is stored and at step 142 the file is processed to determine the current schedule for the supplier. That is to determine what parts are required by the customer, the quantities of each part, and when different quantities of those parts are required by the customer.

As the requirement of the customer is only specified in terms of multiple records for each part number, it can be very difficult for the supplier to determine from the customer data alone what the current customer requirement is. For example, in a previous week's schedule, there may have been an order for five of part number 111 due in one month's time. When the next customer schedule is downloaded, that customer schedule may include an order for a quantity of five of part 111 due in two months' time. However, there is no way to easily determine whether this corresponds to the customer deciding to delay the order by one month or whether this is a new order, different to the previous order. Therefore, it can be impossible to schedule timely manufacture of that part in order to be sure of meeting the deadline for supply of that part, while also meeting deadlines for supply of other parts which will also require manufacturing facilities.

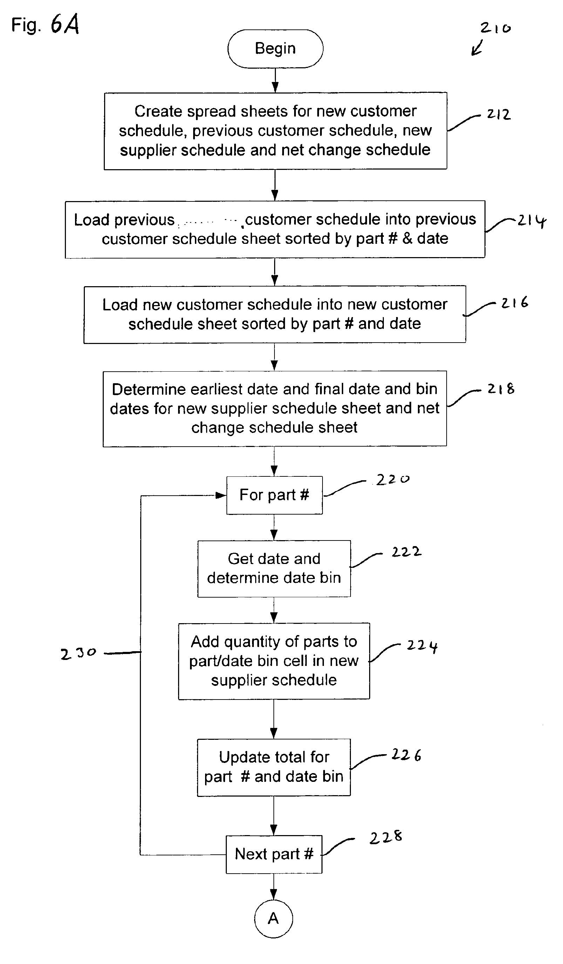

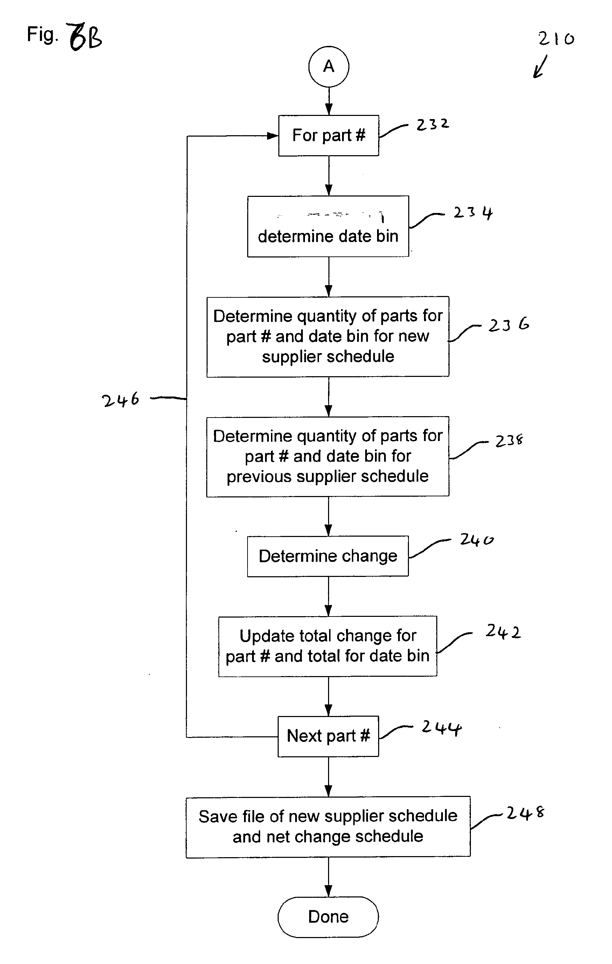

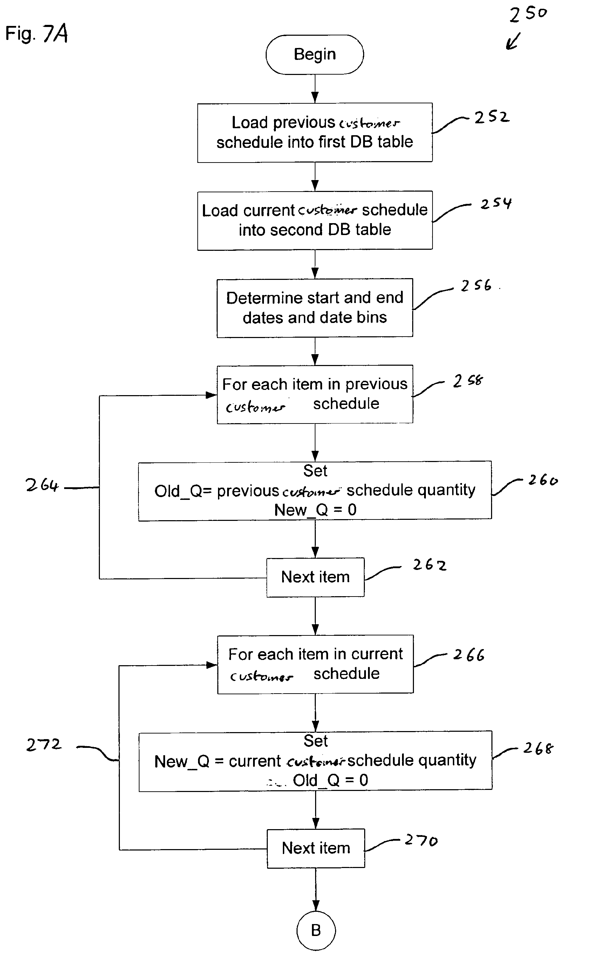

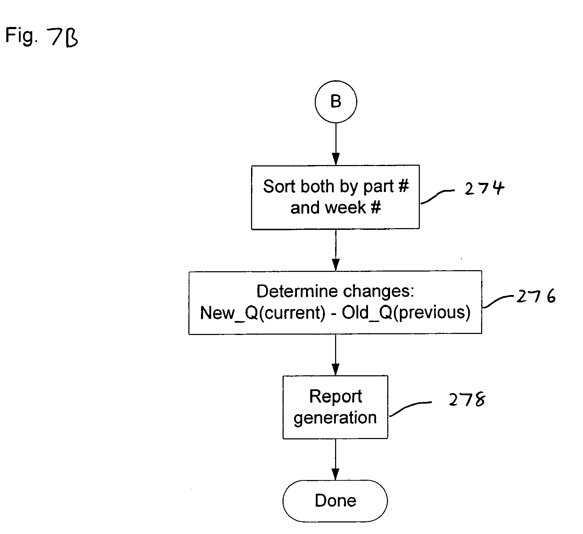

With reference to Figure 4 there is shown a process flowchart illustrating a process 180 for determining the current schedule of parts that the supplier is required to provide to the customer from the downloaded customer schedule data. The customer computer system stores customer schedule data from each previous week. When a new customer schedule has been downloaded, the new customer schedule becomes the current customer schedule and last week's customer schedule becomes the previous customer schedule. In order to determine what the supplier's current schedule is, method 180 makes a comparison between the current customer schedule and a one of the previous customer schedules, but usually the immediately preceding customer schedule. At step 182 the current and previous customer schedule data is loaded into the supplier computer 112. Then at step 184 various data processing operations are carried out on the current customer schedule to determine what the current supplier's schedule actually is. Step 184 generally corresponds to determining how many of each different part is required based on the date by which those parts are required by the customer. After, or instead, of determining the new supplier schedule at step 186 net changes in the supplier's current schedule can be determined. This step generally corresponds to making a comparison between the current supplier schedule and the previous supplier schedule in order to identify changes in the quantity of each part based on the date of supply of those parts. Processes for carrying out steps 184 and 186 will be described in greater detail below with reference to Figures 6a and 6b and 7a and 7b.

After the new supplier schedule and/or the changes in the supplier schedule have been determined at steps 184 and/or 186, the new supplier schedule information or changes in the supplier schedule can be exported for use in a number of formats. In a simplest format, the new supplier schedule data is simply displayed to a user. Additionally, or alternatively, the new supplier schedule or changes data can be supplied to a manufacturing scheduling application, such as an enterprise resource planning system, in order to update a manufacturing schedule to take into account any new orders or changes in current orders of the customer.

Returning to Figure 2, at step 144, the supplier company can determine whether the new supplier schedule can be met and if not, then at step 146 the supplier can notify the customer that they will not be able to fulfill one of the new or changed orders. Then at step 148, the supplier can update their production schedules based on the new supplier schedule and/or changed data. As described above, the new supplier schedule data and/or changes data can be supplied to an enterprise resource planning system 114, so as to plan a manufacturing schedule to meet the customer's requirements. At step 150, those items requiring manufacture during the current time period, based on the manufacturing schedule as updated by the new supplier schedule are manufactured. This can include manufacturing equipment 118 being controlled by, or accessing data from a manufacturing control computer 114 in order to control the manufacture of the required parts. After the parts have been manufactured, then at step 152 the various parts can be shipped to the customer thereby meeting various of the orders.

Then, when the next master schedule is generated by the customer next week the method can be repeated, as represented by line 154, so that the supplier can update their supplier schedule to reflect new orders made by the customer and changes to existing orders. Hence, the supply process is more effectively managed in order to help ensure that the supplier can meet the customer's requirements.

Figure 5 shows a schematic representation of a current supplier schedule 190. The schedule shows the quantity of each part required at various times during the future. A first part number column 192 can store a data item representing the part number, e.g. A010. A first time column 194 is provided for a most current time period, e.g. next week. Further columns are also provided, each being for a subsequent period of time, e.g. the second, third and fourth weeks 196, 198, 200, the following month 202 and the following quarter 204. A totals column 206 is also provided showing the total number of parts up to the end of the final time period. A total value 208 is also provided for each time period, indicating the total number of parts scheduled for manufacture during each time period. Hence, any cell of the supplier schedule tells the supplier the total quantity of that part that has to be supplied during corresponding time period in order to meet the customer's requirements. For example the supplier now knows that a total of 14 of part number C1668 are required to be supplied during the fourth week and therefore the supplier can arrange a production schedule accordingly. As the supplier is aware of the total number of each different type of part that is required at any of the future times, it is easy to schedule the manufacturing process than will be the case if presented with multiple orders for the same type of part. Also, the supplier can plan in advance raw materials required in order to satisfy future customer demand.

For example, a significant stock of any raw materials required for part number B 1423 will be required in order to meet the week 4 production schedule of quantity 197. Also, the supplier can become aware of any potential future significant drains on resources. For example in week 4 a total of 211 parts are required to be manufactured and so the supplier may need to provide further resources in order to meet that requirement. Further, the total quantity for each part allows the supplier to identify which parts are going to require significant production resources going forward. Hence the current supplier schedule 190 makes it easier for a supplier to schedule their production process and manufacture items to meet customer orders.

With reference to Figures 6A and 6B, there is shown a process 210 for determining a current supplier schedule and changes in a supplier schedule according to the invention. Process 210 corresponds generally to steps 184 and 186 of process 180. In one embodiment, process 210 is carried out using a spreadsheet application, such as Excel as provided by Microsoft Corporation. Excel is a trade mark of Microsoft Corporation. Process 210 begins at step 212 at which spreadsheets are created for the new customer schedule, the previous customer schedule, the new supplier schedule to be determined and a new net change schedule also to be determined. At step 214, the previous customer schedule data is loaded into the application and the previous customer schedule sheet is populated with the order data, sorted by part number data items and order date data items. That is, the orders are sorted initially by part number and then for any identical part numbers, orders for identical part numbers are also sorted by date earliest order to latest order. Hence the previous customer schedule sheet has an ordered list of customer orders based on part number and order date. Then at step 216 the same operation is carried out for the new customer schedule data which is loaded into the new customer schedule spreadsheet and again the order data is sorted by part number and order date. Then at step 218 the process determines the earliest order date from either the previous or the new customer schedule data. The process can also identify a latest order date from the previous or new customer schedule data or alternatively a default or set value can be used, e.g. one year from the current time period. At step 218, the process also determines how the order data is to be binned by order date time. For example, in the supplier schedule 190 shown in Figure 5, the order data time is binned by four one week periods, one one month period and one three month period giving a final date of five months. Either the same or different binning dates can be used for the supplier schedule and net change schedule. Once the first and final dates and date bins have been determined at step 218, processing proceeds to step 220.

Steps 220 to 228 determine the current supplier schedule from the new customer schedule data. At step 220 the first part number in the new customer schedule sheet is selected and at step 220 the order date for the selected part number is obtained and the date bin for the new supplier schedule is determined. At step 224 the quantity data item for the selected part number is obtained and added to the current value (initially zero) for the cell in the new supplier schedule spreadsheet corresponding to the part number and date bin. Then at step 226 a total value for the selected part number is updated and also a total value for the date bin of the currently selected part number is also updated. Then at step 228 the next part number in the new customer schedule is identified for processing and processing returns to step 220 as indicated by processing loop 230. Then steps 220 to 228 are repeated for the next part number in the new customer schedule until all the part numbers have been processed. At the end of this process, the data elements of the new supplier schedule have been generated in the cells of the new supplier schedule spreadsheet. That is, the total number of each part for each time period has been determined as well as the totals for each part number and the totals for each time period.

Processing then proceeds step 232, as illustrated in Figure 6B. Steps 232 to 244 allow a supplier net change schedule to be generated. The process begins at step 232 by selecting the first part number from the new customer schedule. Then at step 234, for the selected part number the date bin is determined. Then at step 236 the quantity for the currently selected part number and for the identified date bin is determined from the new supplier schedule. Then at step 238, the previous supplier schedule is used to determine the quantity for the currently selected part number and the time period corresponding to the date bin. Then at step 240 any change in the quantity of the currently selected part number for the selected time period is determined by simply subtracting the quantity from the previous supplier schedule from the quantity from the current supplier schedule. If there has been any change then the sense of the change, that is whether the quantity of the part number has increased or decreased is also determined so that increases and decreases can be displayed in visually distinct manners. Then at step 242 a total change value for the currently selected part number is updated based on the determined change and also the total change value for the date bin is also updated. Processing then proceeds to step 244 at which a next part number is identified for assessment. Processing then returns to step 322, as represented by processing loop 246 and the next part number is selected for evaluation.

After all of the part numbers in the current supplier schedule have been assessed, processing proceeds to step 248 at which the new supplier schedule data and net change supplier schedule data are stored for display, passing to a manufacturing control process or otherwise exported for further use.

With reference to Figures 7A and 7B there is shown a flowchart illustrating a further embodiment of a process 250 for determining a current supplier schedule based on current customer order data and previous customer order data. This embodiment of the method can be implemented using tables in a SQL server database and using a front end client written in visual basic to process the data in the database to generate the scheduled data. Then a reporting program, such as that provided under the name Crystal Reports, can be used to display the data as a schedule, similar to schedule 190 shown in Figure 5.

At step 252 data from the previous customer schedule is retrieved and loaded into a first database table. Then at step 254, the data from the current customer schedule is retrieved and loaded into a second database table. Then at step 256, an earliest order date is determined from the current customer schedule data. A latest or end date is also determined. In one embodiment, the end date is determined as the future most order date. In another embodiment, the end date can be a set future date, such as one year from the current date. Then using the start and end dates, the time period is binned into week long periods in which the start date falls within a first week and the end date falls in a last week.

At step 258 a first part or item in the previous customer schedule is selected. The previous customer schedule table includes a field for a previous quantity data item and a new quantity data item for the record for each part in the table. At step 260, for the currently selected part, the old quantity field has the quantity for the part from the previous customer schedule written to it and the new quantity field has zero written to it. Processing then proceeds to step 262 at which the next part or item in the table is selected for processing. Process flow returns to step 258, as represented by processing loop 264 and processing loops until the old quantity and new quantity data items have been updated for each of the parts or items in the previous customer schedule.

Once processing of the previous customer schedule has been completed processing proceeds to step 266 which initiates a similar procedure for the current customer schedule. At step 266 the first part or item in the current customer schedule is selected. Then at step 268 a new quantity field and an old quantity field in the current customer schedule table are updated with the quantity of the part or item from the current customer schedule and set to zero respectively. Then at step 270, a next part or item is selected and processing loops, as represented by line 272, until all the parts or items in the current customer schedule have been processed.

Then at step 274, the records in both the current customer schedule table and the previous customer schedule table are sorted by part number and by week number. That is, the records in the table are sorted by part number and then for any orders for the same part number, those orders are sorted by date, depending on which of the weeks previously determined, the order date falls. Then, for each part number, the total quantity for each week is determined by summing the quantities for a particular part being due in a particular week. Hence the total number of any particular part number in any particular week for both the previous and current schedules has been determined. Hence at step 274, the total quantity of any of the parts and the corresponding order date for that quantity of parts has been determined.

Then at step 276, any net change in the quantity of parts required in any week is determined. For each part, and for each week for each part, the total quantity for that week from the previous customer schedule is subtracted from the total quantity for that part for the same week from the current customer schedule. Hence, whether there has been an increase, decrease or no change in the total quantity of any of the parts in any of the weeks has been determined and also the size of any net change.

Then step 278 a report generating process is called to display the supplier schedule information derived from the database records. The report generating program can generate a supplier schedule 190 similar to that shown in Figure 5. Hence, the current supplier schedule can be presented in a grid or matrix format with each row corresponding to a different part and each column corresponding to a different time period. Although as described above, the time periods have been binned in periods of one week, weeks can be grouped into larger periods, such as a month, quarter or any other division. The report generating process determines the total quantity of each part required for each order week and displays the corresponding value in the table. The reporting process can also generate totals for each part number and totals for each week and display the corresponding data items. The net change in the required number of parts can also be displayed in the same schedule or a separate schedule, with the same overall format, can be displayed showing the net change in the quantity of each part required by each time period.

Once the current supplier schedule and net change schedule have been completed, as illustrated in Figure 2, the data can be used to determine whether the supplier will be able to meet the requirements of the customer and can then update production schedules taking into account any changes in the customer's requirements.

Generally, embodiments of the present invention, and in particular the processes involved in determining a current supplier schedule, changes in a supplier schedule and controlling a manufacturing process, employ various processes involving data stored in or transferred through one or more computer systems. Embodiments of the present invention also relate to an apparatus for performing these operations. This apparatus may be specially constructed for the required purposes, or it may be a general-purpose computer selectively activated or reconfigured by a computer program and/or data structure stored in the computer. The processes presented herein are not inherently related to any particular computer or other apparatus. In particular, various general-purpose machines may be used with programs written in accordance with the teachings herein, or it may be more convenient to construct a more specialized apparatus to perform the required method steps. A particular structure for a variety of these machines will appear from the description given below.

In addition, embodiments of the present invention relate to computer readable media or computer program products that include program instructions and/or data (including data structures) for performing various computer-implemented operations. Examples of computer-readable media include, but are not limited to, magnetic media such as hard disks, floppy disks, and magnetic tape; optical media such as CD-ROM disks; magnetooptical media; semiconductor memory devices, and hardware devices that are specially configured to store and perform program instructions, such as read-only memory devices (ROM) and random access memory (RAM). The data and program instructions of this invention may also be embodied on a carrier wave or other transport medium. Examples of program instructions include both machine code, such as produced by a compiler, and files containing higher level code that may be executed by the computer using an interpreter.

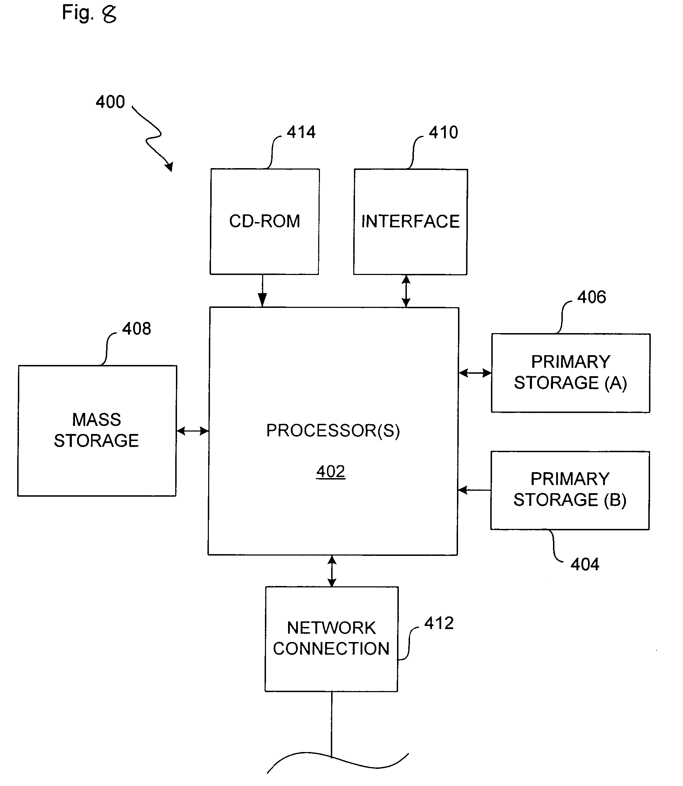

Figure 8 illustrates a typical computer system that, when appropriately configured or designed, can serve as an supplier schedule server of this invention. The computer system 400 includes any number of processors 402 (also referred to as central processing units, or CPUs) that are coupled to storage devices including primary storage 406 (typically a random access memory, or RAM), primary storage 404 (typically a read only memory, or ROM). CPU 402 may be of various types including microcontrollers and microprocessors such as programmable devices (e.g., CPLDs and FPGAs) and unprogrammable devices such as gate array ASICs or general purpose microprocessors. As is well known in the art, primary storage 404 acts to transfer data and instructions uni-directionally to the CPU and primary storage 406 is used typically to transfer data and instructions in a bi-directional manner. Both of these primary storage devices may include any suitable computer-readable media such as those described above. A mass storage device 408 is also coupled bi-directionally to CPU 402 and provides additional data storage capacity and may include any of the computer-readable media described above. Mass storage device 408 may be used to store programs, data and the like and is typically a secondary storage medium such as a hard disk. It will be appreciated that the information retained within the mass storage device 408, may, in appropriate cases, be incorporated in standard fashion as part of primary storage 406 as virtual memory. A specific mass storage device such as a CD-ROM 414 may also pass data uni-directionally to the CPU.

CPU 402 is also coupled to an interface 410 that connects to one or more input/output devices such as such as video monitors, track balls, mice, keyboards, microphones, touch-sensitive displays, transducer card readers, magnetic or paper tape readers, tablets, styluses, voice or handwriting recognizers, or other well-known input devices such as, of course, other computers. Finally, CPU 402 optionally may be coupled to an external device such as a database or a computer or telecommunications network using an external connection as shown generally at 412. With such a connection, it is contemplated that the CPU might receive information from the network, or might output information to the network in the course of performing the method steps described herein.

Although the above has generally described the present invention according to specific processes and apparatus, the present invention has a much broader range of applicability. In particular, aspects of the present invention is not limited to any particular kind of part or item, or to any particular manner of supply of parts or items, or to any particular industry or industrial sector. Rather, the invention can be of utility in any industry and in any supplier relationship with a customer requiring a variety of different items at different times and wherein those requirements typically change with time. One of ordinary skill in the art would recognize other variants, modifications and alternatives in light of the foregoing discussion.

Further, the invention is not necessarily limited to the specific structures and functions depicted in the drawings, which are by way of general illustration of the principles of the invention only. For example, unless the context requires otherwise, the invention is not limited to the specific data processing operations depicted in the flow charts which are merely schematic. The various steps of the data processing operations may be varied, for example by being broken down into a larger number of sub-processes or being combined into more general processes, and, unless required, the order and timing of the operations may be varied.

## Claims

1. A computer implemented method for determining a current supplier schedule specifying respective supply dates for a plurality of quantities of different parts, comprising:
receiving a current customer requirement file including data items specifying a customer's current requirement of different parts each having associated supply dates from a supplier;
determining the total quantity of each different type of part for each of a plurality of different time periods;
storing data items specifying the total quantity of each different part and respective associated supply dates in a current supplier schedule file; and
exporting the current supplier schedule file.

2. The method as claimed in claim 1, wherein the current supplier schedule file is exported to a display process to display the current supplier schedule.

3. The method as claimed in claim 1 or 2, wherein the current supplier schedule file is exported to a manufacturing planning process.

4. The method as claimed in any of claims 1 to 3, wherein the current supplier schedule file is exported to a manufacturing control process.

5. The method of claim 4, further comprising:
the manufacturing control process controlling a manufacturing device to manufacture at least some of the items.

6. The method as claimed in any preceding claim and further comprising determining a current net change supplier schedule by:
determining the net change in the total quantity of each different type of part for each of a plurality of different time periods from a previous supplier schedule and the current supplier schedule;
storing data items specifying the net change in the total quantity of each different part and respective associated supply dates in a current net change supplier schedule file; and
exporting the current net change supplier schedule file.

7. The method as claimed in any preceding claim, wherein determining the total quantity of each different type of part includes ordering part type data items by part type and supply date.

8. The method as claimed in any preceding claim wherein determining the total quantity of each different type of part includes maintaining a total data item from quantity data items for each of the plurality of different time periods.

9. The method as claimed in claim 2, and further comprising displaying the current supplier schedule including part identifiers, dates for each of the plurality of time periods and the total number of each part in the schedule.

10. The method as claimed in claim 6, and further comprising displaying the current net change supplier schedule including part identifiers, dates for each of the plurality of time periods and the net change in the total number of each part in the schedule.

11. A method for manufacturing a plurality of different items, the method comprising;
determining a current supplier schedule requirement for the plurality of different parts according to the method of claim 1; and
manufacturing at least some of the plurality of different items specified in the current supplier schedule.

12. A data processing apparatus for determining a current supplier schedule for a plurality of different parts, comprising a data processing device and computer program code for configuring the data processing device to:
receive a current customer requirement file including data items specifying a customer's current requirement of different parts each having associated supply dates from a supplier;
determine the total quantity of each different type of part for each of a plurality of different time periods;
store data items specifying the total quantity of each different part and respective associated supply dates in a current supplier schedule file; and
export the current supplier schedule file.

13. A manufacturing system for manufacturing a part, the manufacturing system comprising:
a data processing device as claimed in claim 12; and
a manufacturing device which can be operated by a manufacturing device control process, wherein the manufacturing control process can access the current supplier schedule file to control the manufacturing device to manufacture the part.

14. Computer program code executable by a data processing device to provide the method of any of claims 1 to 10 or the apparatus of claim 12 or the manufacturing system of claims 13.

15. A computer program product comprising a computer readable medium bearing computer program code as claimed in claim 14.
